# EUROPÄISCHE PATENTSCHRIFT

(11) **EP 2 335 795 B1**
(45) Veröffentlichungstag und Bekanntmachung des Hinweises auf die Patenterteilung: **13.02.2013**
(21) Anmeldenummer: 09179271.3
(22) Anmeldetag: 15.12.2009
(51) Int. Cl.: B01D 33/333, E02B 8/02

(54) **Förderband-Filtereinrichtung**
Filtering device conveyor belt
Dispositif de filtre à bande de transport

(43) Veröffentlichungstag der Anmeldung: 22.06.2011
(73) Patentinhaber: Frankenberger, Guido, 35578 Wetzlar (DE)
(72) Erfinder: Frankenberger, Guido, 35578 Wetzlar (DE)
(74) Vertreter: Tappe, Hartmut

(56) Entgegenhaltungen:
- WO-A1-98/22662
- DE-A1- 19 727 354
- DE-A1-102004 062 316
- US-A- 1 190 921
- US-A1- 2007 241 039

## Beschreibung

Die vorliegende Erfindung betrifft eine Förderband-Filtereinrichtung zur mechanischen Reinigung einer in einem Kanal oder dergleichen strömenden, mit Feststoffen verunreinigten Flüssigkeit mit einem endlosen Filterband aus miteinander verbundenen, jeweils um eine waagerecht liegende Gelenkachse gegeneinander verschwenkbaren flächigen Filterelementen und
je einem beiderseits des Filterbandes vorgesehenen flexiblen Antriebsmittels, zum Beispiel einen Kettentrieb mit Umlenkelementen und zwei endlosen Antriebsketten, an denen seitlich die Filterelemente befestigt sind, sowie
einem Rahmengestell, das die Umlenkelemente und das Filterband trägt, wobei jedes Filterelement an einem Kettenglied starr befestigt ist, und Stirnflächen des Filterelementes jeweils eine mit den Gelenkachsen der Kettenglieder parallele Stoßkante aufweisen, derart, dass die einander gegenüberliegenden Stoßkanten einen zwischen zwei Filterelementen ausgebildeten Filterspalt definieren.

Die Förderband-Filtereinrichtungen der eingangs genannten Art werden auch als sog. "Paternoster-Filterrechen" bezeichnet und dienen vor allem zur mechanischen Reinigung strömender Abwässer in hierzu ausgebildeten Kanälen. Die Filterelemente werden von dem Abwasser durchströmt und tragen das Filtergut, welches die Filtersiebe nicht passieren kann aus dem Kanal aus. Aufgrund des Aufbaus des Filterbandes aus miteinander verbundenen Filterelementen, die über beidseitig an den Filterelementen befestigte flexiblen Antriebsmittel verbunden sind, ergibt sich insbesondere wegen der erforderlichen Relativbeweglichkeit der Filterelemente in den Umlenkbereichen die Notwendigkeit, zwischen den einzelnen Filterelementen einen Spalt vorzusehen, der diese Relativbeweglichkeit ermöglicht.

Aus dem Stand der Technik sind bereits erfolgreiche Entwicklungen bekannt, die es ermöglichen, einen derartigen Filterspalt unabhängig von der tatsächlichen Relativpositionierung der Filterelemente konstant auszubilden, so dass der Filterspalt sowohl im Bereich der gradlinigen Förderabschnitte eines Filterbandumlaufs sowie in den mit einem Krümmungsradius versehenen Umlenkförderstecken konstant gehalten werden kann. Eine derartige Förderband-Filtereinrichtung ist beispielsweise aus der EP 0 676 227 A1 bekannt.

Obwohl es somit bereits möglich ist, einen zwischen zwei Filterelementen ausgebildeten Filterspalt über die gesamte Förderstrecke konstant zu halten, können beispielsweise Filterspalte zwischen unterschiedlichen Filterelementen aufgrund von Fertigungstoleranzen der Kette und der Filterkörper unterschiedlich ausgebildet sein. Darüber hinaus kommt es regelmäßig auch aufgrund einer sich über die Lebensdauer der Antriebskette zwangsläufig einstellenden Längung der Antriebskette zu einer mehr oder weniger stetigen Vergrößerung der Filterspalte, so dass sich entsprechend die Filterwirkung bzw. die Effektivität der Förderband-Filtereinrichtung aufgrund der zunehmenden Spaltbreite insbesondere zum Ende der Standzeit der Antriebsmittel hin verschlechtern kann.

Weiterhin bietet die bereits aus vorgenannter EP 0 676 227 A1 bekannte vorteilhafte Entwicklung zwar die Möglichkeit, einen einmal eingestellten Filterspalt über die Förderbandstrecke konstant zu halten. Jedoch erweist sich die Realisierung eines Filterspaltes wie vorstehend ausgeführt, aus konstruktiven Gründen als erforderlich, so dass der Filterspalt in jedem Fall eine Unstetigkeitsstelle in der ansonsten durch die in den Filterelementen ausgebildeten Lochraster einheitlich gestalteten Filterfläche darstellt und eine exakte Definition der aktiven Filterflächen nur eingeschränkt möglich ist.

Die WO 98/22662 A1 zeigt eine Förderband-Filtereinrichtung, bei der zwischen benachbarten Filterelementen ein Spalt ausgebildet ist, der zur Abdeckung mit einem Fugenbrückenprofil versehen ist, das verhindern soll, dass Partikel, die größer als Sieböffnungen der Filterelemente sind, diese umgehen können. Das Fugenbrückenprofil umfasst zwei Profilleisten, die Haltenuten ausbilden, welche jeweils eine der beiden Längskanten der Filterelemente beweglich und schwenkbar aufnehmen und hierzu eine lichte Weite aufweisen, die größer ist als die Dicke des für die Filterelemente verwendeten Lochblechs.

Die US 2007/241039 A1 zeigt eine Spaltdichtung, die zwischen benachbarten Filterelementen innerhalb des zwischen den Filterelementen ausgebildeten Spaltes angeordnet ist. Darüber hinaus ist die bekannte Spaltdichtung mit einem der beiden Filterelemente fest verschraubt.

Die DE 197 27 354 A1 zeigt ebenfalls eine innerhalb des Spaltes zwischen zwei benachbarten Filterelementen angeordnete Spaltdichtung, die darüber hinaus mit beiden Filterelementen formschlüssig verbunden ist.

Die US 1 190 921 A zeigt eine innerhalb des Spaltes zwischen zwei benachbarten Filterelementen angeordnete Spaltdichtung, die mit beiden Filterelementen formschlüssig verbunden ist.

Der vorliegenden Erfindung liegt daher die Aufgabe zu Grunde, eine Förderband-Filtereinrichtung dahingehend weiterzuentwickeln, dass die vorstehend erläuterten Nachteile, die sich im Zusammenhang mit der Ausbildung eines Filterspaltes bei einer Förderband-Filtereinrichtung ergeben, ausgeräumt werden.

Diese Aufgabe wird durch eine Förderband-Filtereinrichtung mit den Merkmalen des Anspruchs 1 gelöst.

Erfindungsgemäß ist an der Förderband-Filtereinrichtung jeweils zwischen zwei benachbarten Filterelementen ein Filterspalt ausgebildet, der eine Spaltdichtung aufweist, die auf der einen Seite des Filterbandes eine den Filterspalt überdeckende, sich an den Filterelementen mit der Dichtkraft abstützende Dichtleiste aufweist. Auf der anderen Seite des Filterbandes ist eine mit der Dichtleiste verbundene Vorspanneinrichtung zur Erzeugung der Dichtkraft vorgesehen.

Aufgrund der erfindungsgemäßen Ausgestaltung der Förderband-Filtereinrichtung mit einer Spaltdichtung, wird der Filterspalt wirkungsvoll abdichtet, ohne dass die Funktion der Förderband-Filtereinrichtung, die eine ungehinderte Führung der Filterelemente über die Förderstrecke erforderlich macht, behindert wird. Aufgrund der unter Vorspannung gegen die Filterelemente abdichtend anliegenden Dichtleiste sind ebenso wie zwischen den einzelnen Filterelementen zwischen der Dichtleiste und den angrenzenden Filterelementen Relativbewegungen möglich. Dabei werden diese Relativbewegungen genauso wenig wie die Dichtwirkung der Dichtleiste durch die Vorspanneinrichtung behindert, da sich diese auf der der Dichtleiste gegenüberliegenden Seite des Filterbandes befindet.

Die erfindungsgemäß angeordnete Dichtleiste ermöglicht somit die Abdichtung eines Filterspaltes unabhängig von dessen tatsächlicher Breite und auch unabhängig davon, ob sich dieser Filterspalt während eines Förderbandumlaufs oder auch während der Standzeit der Förderband-Filtereinrichtung bzw. deren Antriebsmittel ändert. Ein Filterspalt kann also regelmäßig unterdrückt bzw. abgedichtet werden, so dass die effektive Filterfläche tatsächlich ausschließlich durch das Lochraster der einzelnen Filterelemente bestimmt ist.

Bei einer bevorzugten Ausführungsform ist die Dichtleiste auf der Anströmseite des Filterbandes und die Vorspanneinrichtung auf der Abströmseite des Filterbandes angeordnet, so dass sichergestellt ist, dass die auf die Dichtleiste auftreffende Fluidströmung zu einer Erhöhung der Dichtkraft beiträgt.

Besonders vorteilhaft ist es, wenn die Stirnflächen der Filterelemente auf der Anströmseite des Filterbandes einen keilförmigen Filterspalt mit im Wesentlichen V-förmig zueinander angestellten, durch die Stirnflächen gebildeten Spaltflanken ausbilden und die Dichtleiste mit ihren Längsrändern abdichtend gegen die Stirnflächen anliegt. Hierdurch ist sichergestellt, dass aufgrund der V-förmigen Anstellung der Spaltflanken die für die Ausbildung einer Dichtkraft entscheidende, auf die Spaltflanken wirkende Normalkraftkomponente nicht nur in den Umlenkbereichen des Förderbandes sondern auch über die geradlinigen Förderstrecken realisiert ist.

Eine weitere Erhöhung der Dichtwirkung unabhängig von der Relativstellung der Dichtleiste zu den Stirnflächen wird insbesondere bei durch die Stirnflächen ausgebildeten Spaltflanken möglich, wenn die Längsränder der Dichtleiste durch eine konvex ausgebildete Umfangskontur der Dichtleiste gebildet sind. Dies kann im Falle der Ausbildung der Dichtleiste aus einem Flacheisen bereits dadurch erfolgen, das die Längsränder des Flacheisens abgerundet sind.

Als besonders vorteilhaft erweist es sich in diesem Zusammenhang, wenn die Dichtleiste einen kreisförmigen Querschnitt aufweist. Darüber hinaus sind natürlich auch andere Querschnittsformen, wie beispielsweise ein dreieckförmiger Querschnitt, möglich.

Wenn die Dichtleiste mit einem Hohlquerschnitt versehen ist, ist es möglich, die Masse der Dichtleiste auf ein erforderliches Maß zu beschränken, da für die Dichtwirkung lediglich die Art und Ausbildung der Umfangskontur der Dichtleiste wesentlich ist.

Um bei Bedarf eine vollständige Abdichtung des Filterspaltes ausschließen zu können, kann die Dichtleiste mit Durchflussöffnungen zum Durchtritt der strömenden Flüssigkeit versehen sein, wobei insbesondere in dem Fall, dass die Dichtleiste hierzu mit einem Lochraster versehen ist, die Dichtleiste selbst als zusätzlich zu den Filterelementen ausgebildetes ergänzendes Filterelement wirken kann. So kann beispielsweise das Lochraster entsprechend dem Lochraster der Filterelemente gewählt werden, so dass auf der einen Seite durch die Dichtleiste ein unerwünschter Filterspalt unterdrückt wird, und auf der anderen Seite die Dichtleiste zu einer Erhöhung einer exakt definierten Filterfläche beiträgt.

In einer bevorzugten Ausführungsform weist die Vorspanneinrichtung ein mit einem Ende mit der Dichtleiste verbundenes, sich in Anströmrichtung durch den Filterspalt erstreckendes Zugelement auf, das mit seinem anderen Ende mit einer Druckfedereinrichtung verbunden ist, die sich an einer Stützbasis abstützt, die den Filterspalt auf der der Dichtleiste abgewandten Seite des Filterbands überbrückt. Besonders vorteilhaft wird auf diese Art und Weise eine Vorspanneinrichtung realisiert, die selbst eine sich über die Förderbandstrecke einstellende Spaltänderung nicht behindert, so dass das Risiko, dass durch die Vorspanneinrichtung die erforderliche relative Beweglichkeit der Filterelemente gegeneinander behindert wird selbst bei sich ändernden Filterspalten weitestgehend ausgeschlossen werden kann.

Besonders vorteilhaft ist es auch, wenn die Druckfedereinrichtung aus einem formelastischen Kunststoffelement ausgebildet ist, so dass auf korrosionsempfindliche Bauteile zur Realisierung der Druckfedereinrichtung verzichtet werden kann.

Wenn darüber hinaus das Kunststoffelement rohr- oder hülsenförmig ausgebildet ist, lassen sich die gewünschten formelastischen Effekte mit besonders geringem Aufwand realisieren.

Als besonders vorteilhaft erweist es sich auch, wenn die Vorspanneinrichtung bezogen auf die Breite des Filterspaltes mittig angeordnet ist, da somit einerseits mit nur einer Vorspanneinrichtung eine sichere Funktion der Spaltdichtung gegeben ist, und darüber hinaus, insbesondere in dem Fall, dass die Spaltdichtung bzw. die Dichtleiste als ergänzendes Filterelement ausgebildet ist, durch die Vorspanneinrichtung keine Strömungsbehinderung erzeugt wird.

Nachfolgend werden bevorzugte Ausführungsformen der Erfindung anhand der Zeichnung näher erläutert.

Es zeigen:
- **Fig. 1**:: eine Seitenansicht einer Förderband-Filtereinrichtung im Betrieb;
- **Fig. 2**:: zwei beidseitig über eine Antriebskette miteinander verbundene Filterelemente in einer Relativanordnung wäh- rend einer Längsförderstrecke und mit einer ersten Ausführungsform einer Spaltdichtung;
- **Fig. 3:**: die in **Fig. 2** dargestellten Filterelemente in Förderrichtung gesehen;
- **Fig. 4:**: eine Schnittdarstellung der in **Fig. 3** dargestellten Filterelemente gemäß Schnittlinienverlauf IV-IV;
- **Fig. 5:**: eine vergrößerte Teildarstellung eines zwischen den in **Fig. 4** dargestellten Filterelementen ausgebildeten Filterspaltes;
- **Fig. 6:**: die in **Fig. 2** dargestellten Filterelemente in einem Umlenkbereich der Förderstrecke;
- **Fig. 7:**: die in **Fig. 6** dargestellten Filterelemente in Förderrichtung gesehen;
- **Fig. 8:**: eine Schnittdarstellung der in **Fig. 7** dargestellten Filterelemente gemäß Schnittlinienverlauf VIII-VIII;
- **Fig. 9:**: eine vergrößerte Teilansicht des zwischen den Filterelementen im Umlenkbereich ausgebildeten Filterspaltes;
- **Fig**. **10**:: zwei beidseitig über eine Antriebskette miteinander verbundene Filterelemente in einer Relativanordnung während einer Längsförderstrecke und mit einer zweiten Ausführungsform einer Spaltdichtung;
- **Fig**. **11**:: die in **Fig 10** dargestellten Filterelemente in einem Umlenkbereich der Förderstrecke;

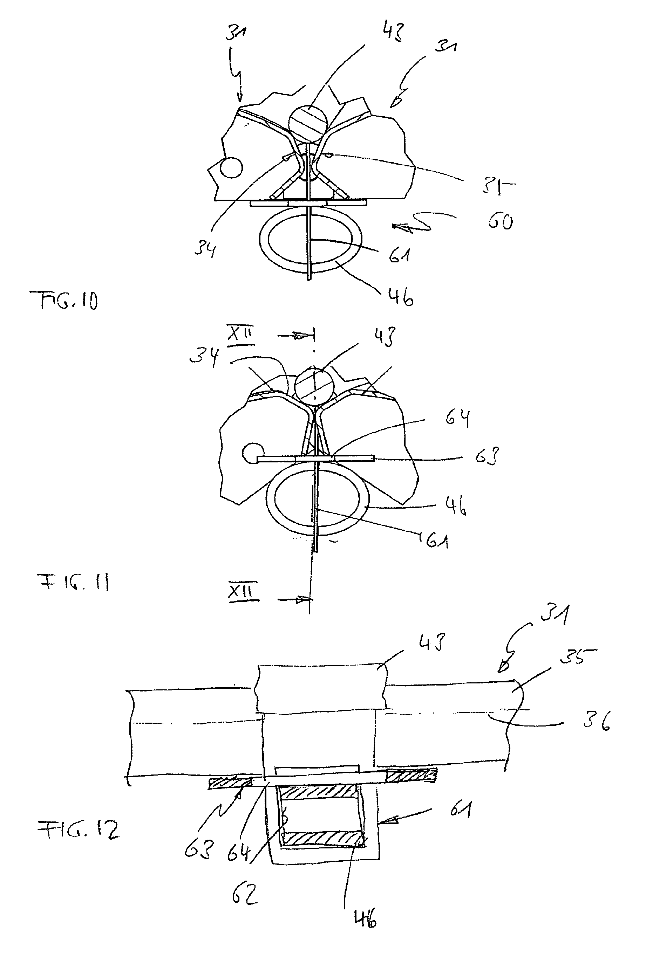

- **Fig. 12:**: eine Schnittdarstellung der in **Fig. 10** dargestellten Spaltdichtung.

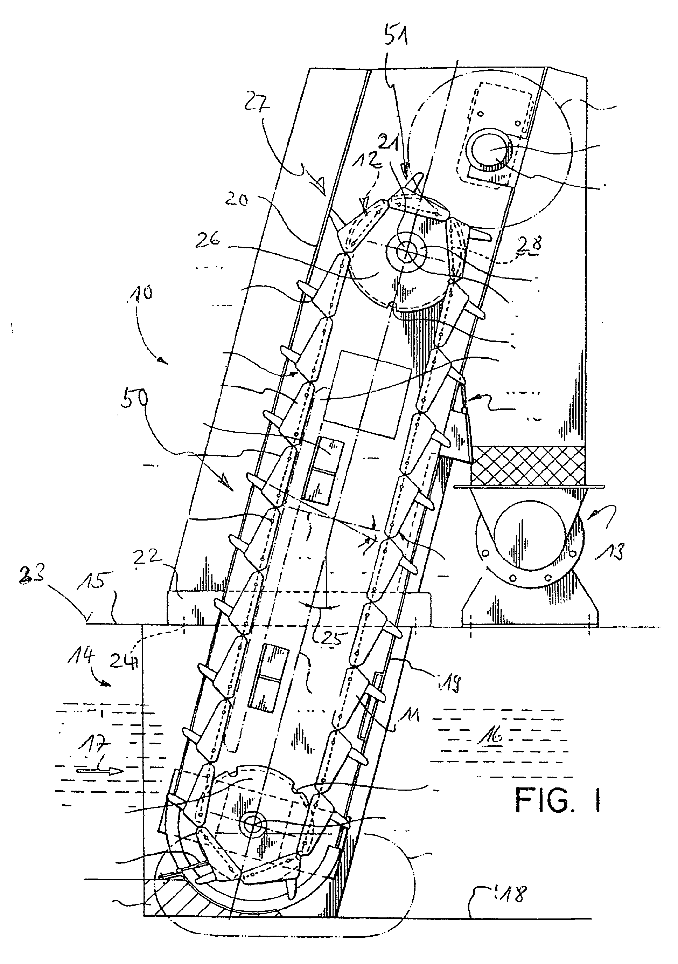

Die in Fig. 1 dargestellte Förderband-Filtereinrichtung weist ein Rahmengestell 10, ein an dem Rahmengestell 10 geführtes Filterband 11, einen mit dem Rahmengestell 10 und dem Filterband 11 verbundenen Kettenbetrieb 12 und eine Filtergut-Abförderung 13 auf, die zur Reinigung eines Kanals 14 vorgesehen ist, der sich unterhalb des Erdboden-Niveaus 15 erstreckt.

Der Kanal 14 wird von einer mit Feststoffen beladenen Flüssigkeit 16 durchströmt in einer durch einen Richtungspfeil veranschaulichten Strömungsrichtung 17, wobei sich der Kanal 14 senkrecht zur Papierebene in einer erheblichen Breite erstrecken kann. Die Förderband-Filtereinrichtung reicht bis zu einer Kanalsohle 18, so dass der gesamte Strömungsquerschnitt des Kanals 14 quer zur Strömungsrichtung 17 so abgesperrt ist, dass die Flüssigkeit 16 den im Kanal 14 befindlichen Teil der Förderband-Filtereinrichtung passieren muss.

Die in **Fig. 1** dargestellte Förderband-Filtereinrichtung wird aufgrund ihrer Anordnung in dem Kanal 14 mit quer zur Strömungsrichtung 17 orientiertem Filterband 11 auch als "Durchfluß-Filterbandrechen" bezeichnet. Die nachfolgend erläuterte, durch den Anspruch 1 definierte Erfindung kann jedoch genauso bei Förderband-Filtereinrichtungen zum Einsatz kommen, die eine Orientierung des Filterbands parallel zur Strömungsrichtung aufweisen, die in Fachkreisen auch als "Central-Flow"- oder "Dual-Flow"-Filterbandrechen bezeichnet werden, bei denen eine Durchströmung des Filterband quer zur Strömungsrichtung der Flüssigkeit im Kanal erfolgt.

Das Rahmengestell 10 besteht im vorliegenden Fall aus einem unteren Gestellteil 19, das den von der Flüssigkeit 16 zu passierenden Teil bildet, und einem oberen Gestellteil 20, das sich außerhalb des Kanals 14 befindet und zur Lagerung eines elektromotorischen Antriebs dient, der eine Welle 21 antreibt. Zwischen den Gestellteilen 19 und 20 ist ein Anschlussrahmen 22 vorgesehen, mit dessen Hilfe das Rahmengestell 10 beiderseits des Kanals 14 ortsfest arretiert ist, beispielsweise durch an Seitenwänden 23 des Kanals 14 einbetonierte Schraubanker 24.

Die Gestellteile 19, 20 sind an den Anschlussrahmen 22 so angeschlossen, dass das Rahmengestell 10 um einen spitzen Förderwinkel 25 zur senkrechten geneigt angeordnet ist, wenn das Erdboden-Niveau 15 etwa waagerecht verläuft. Der Förderwinkel beträgt im dargestellten Ausführungsbeispiel etwa 15°, kann jedoch auch insbesondere größer ausgeführt sein. Anstatt eines fest eingestellten Förderwinkels 25 kann dieser auch abweichend von der Zeichnungsdarstellung veränderbar ausgeführt sein, so dass das Rahmengestell 10 an dem Anschlussrahmen 24 verschwenkbar angeschlossen sein kann.

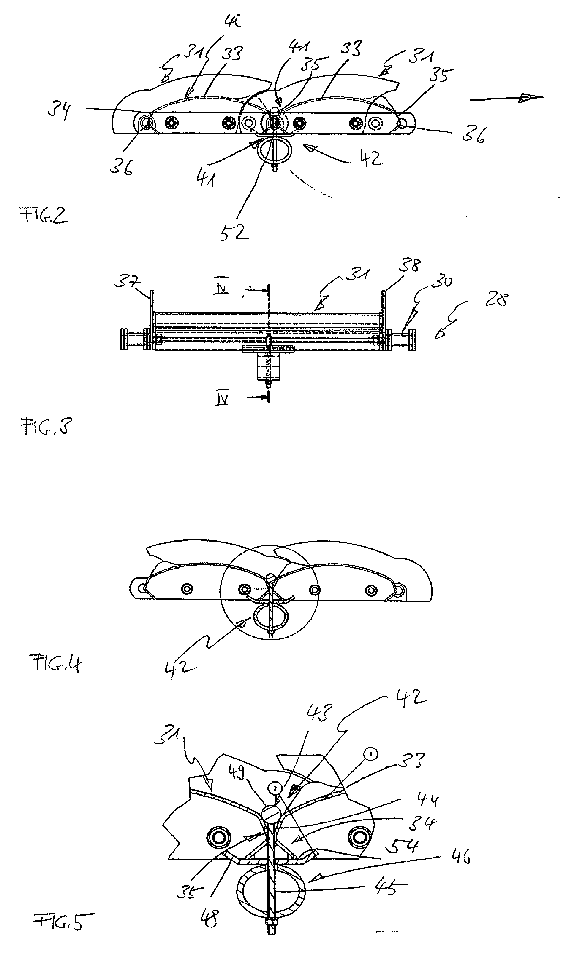

Von der Welle 21 werden Kettenräder 26 angetrieben, die beiderseits des Filterbandes 11 angeordnet sind und jeweils zum Antrieb einer Antriebskette 28 dienen. Die Antriebsketten 28 sind aus Kettengliedern 30 zusammengesetzt, wobei, wie insbesondere aus einer Zusammenschau der Darstellungen gemäß **Fig. 2** und **3** hervorgeht, jeweils zwei Kettenglieder 30 der Antriebsketten 28 ein Filterelement 31 zwischen sich aufnehmen, derart, dass die Antriebsketten 28 zusammen mit den Filterelementen 31 das Filterband 11 ausbilden.

Die Filterelemente weisen jeweils einen Filterkorb 40 auf, der im vorliegenden Fall aus einem gelochten Blechmaterial ausgebildet ist und einen zur Strömungsrichtung 17 hin konvex ausgebildeten Anströmboden 33 aufweist, der in Förderrichtung zu seinen Rändern hin abgewinkelte Stirnflächen 34, 35 aufweist, die eine Stoßkante 36 ausbilden. Zur seitlichen Begrenzung des Anströmbodens 33 und zur Verbindung mit den Kettengliedern 30 weisen die Filterkörbe 40 scheibenförmig ausgebildete Seitenwangen 37, 38 auf.

Weiterhin ist den **Fig. 2** und **3** zu entnehmen, dass zwischen den Stoßkanten 36 zweier benachbarter Filterelemente 31 ein Filterspalt 41 ausgebildet ist, in dem eine Spaltdichtung 42 angeordnet ist. Die benachbarten Stoßkanten 36 sind parallel und zu beiden Seiten einer Gelenkachse 52 angeordnet, auf der die Kettenglieder 30 und somit die Filterelemente 31 über Kettenbolzen drehgelenkig miteinander verbunden sind.

Wie aus der **Fig. 4** zu ersehen ist und auch insbesondere die vergrößerte Darstellung der Spaltdichtung 42 in **Fig. 5** erkennen lässt, weist die Spaltdichtung 42 eine im hier dargestellten Ausführungsbeispiel aus einem Rundmaterial hergestellte Dichtleiste 43 auf, die mit einer Vorspanneinrichtung 55 kraftschlüssig verbunden ist. Die Vorspanneinrichtung 55 weist ein hier als Zugstab ausgebildeten Zugelement 45 auf, das über ein Anschlussende 44 mit der Dichtleiste verbunden ist. Auf dem Zugelement 45 angeordnet befindet sich ein hier als formelastische Kunststoffhülse ausgebildetes Druckfederelement 46, das von dem Zugelement 45 durchdrungen wird, derart, dass das Druckfederelement 46 zwischen einem im vorliegenden Fall durch eine auf das freie Ende des Zugelements 45 aufgeschraubte Mutter gebildeten Federanschlag 47 und einem längsverschiebbar auf dem Zugelement 45 aufgenommenen Stützanschlag 48 aufgenommen ist. Der im vorliegenden Fall durch ein Stützblech ausgebildete Stützanschlag 48 stützt sich an durch freie Enden der Stirnflächen 35 bzw. 34 gebildeten Stützkanten 54 ab.

Aufgrund der durch das Druckfederelement 46 auf die Dichtleiste 43 wirkenden Zugkraft wird die Dichtleiste 43 mit ihrer Umfangskontur 49 gegen die Stirnflächen 34, 35 der einander benachbarten Filterelemente 31 gedrängt, wobei die Stirnflächen 34, 35 aufgrund ihrer V-förmigen Anstellung zueinander eine keilförmige Aufnahme für die Dichtleiste 43 ausbilden, und die in Strömungsrichtung 17 engste Stelle den Filterspalt 41 definiert.

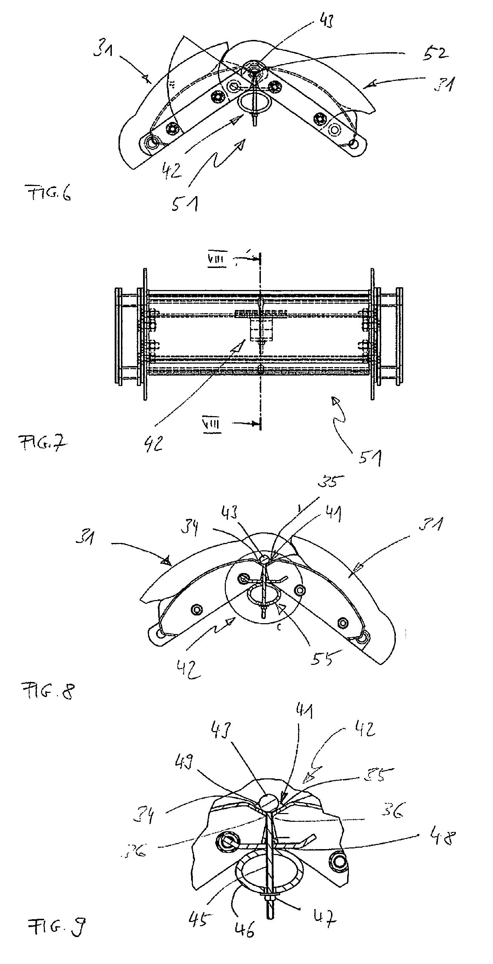

Im Gegensatz zu den **Fig. 2** bis **5**, die zwei benachbarte Filterelemente 31 in einer Relativanordnung während des Durchlaufs einer Längsförderstrecke 50 (siehe **Fig. 1****)** der Förderband-Filtereinrichtung zeigen, ist in den Fig. **6** bis **9** die Relativanordnung zweier Filterelemente 31 im Umlenkbereich 51 (siehe **Fig**. **1****)** der Förderband-Filtereinrichtung dargestellt. Im Übrigen zeigen die **Fig. 6** bis **9** dieselben Bauteile und Komponenten der Förderband-Filtereinrichtung, die somit in den **Fig. 6** bis 9 mit denselben Bezugszeichen wie in den **Fig. 2** bis **5** versehen sind.

Wie insbesondere ein Vergleich der **Fig. 4** und **5**, die die Relativanordnung der Spaltdichtung 42 im Filterspalt 41 während einer Förderung der Filterelemente 31 entlang der Längsförderstrecke 50 zeigt, mit den **Fig. 8** und **9** deutlich macht, die die Relativanordnung der Spaltdichtung 42 im Filterspalt 41 in dem Umlenkbereich 51 zeigt, ergibt sich aufgrund der relativen Verschwenkung der Filterelemente 31 um die Gelenkachse 52 (siehe **Fig. 6**) eine Verlagerung der Position der Dichtleiste 43 auf den Stirnflächen 34, 35, der benachbarten Filterelemente 31. Gleichzeitig wird aber auch deutlich, dass trotz der veränderten Relativpositionierung nach wie vor eine Anlage der Umfangskontur 49 der Dichtleiste 43 gegen die Stirnflächen 34, 35 sichergestellt ist. Aufgrund der durch die Umlenkung bedingten veränderten Anstellung der Stirnflächen 34, 35 zueinander ergibt sich lediglich eine Erhöhung der auf die Dichtleiste wirkenden Zugspannung als Folge einer zwischen dem Federanschlag 47 des Zugelements 45 und dem Stützanschlag 48 erfolgenden Kompression des Druckfederelements 46.

Um sicherzustellen, dass es in der in Fig. 9 dargestellten Relativanordnung der Stirnflächen 34, 35 nicht zu einem Einklemmen des Zugelements 45 in dem Filterspalt 41 kommt, können die Stirnflächen 34, 35 im Bereich der Stoßkanten 36 mit entsprechenden Ausnehmungen versehen sein.

In den **Fig**. **10** bis **12** ist in einer weiteren möglichen Ausführungsform eine Spaltdichtung 60 dargestellt, die zur Abdichtung des zwischen den Stirnflächen 34, 35 benachbarter Filterelemente 31 ausgebildeten Filterspaltes 41 dient. Die Spaltdichtung 60 weist im vorliegenden Fall eine mit der Dichtleiste 43 der Spaltdichtung 42 übereinstimmend ausgebildete Dichtleiste 43 auf. Im Unterschied zu der Spaltdichtung 42 weist die Spaltdichtung 60 eine Vorspanneinrichtung 65 mit einem Zugelement 61 auf, das, wie insbesondere aus einer Zusammenschau der **Fig. 10** und **12** hervorgeht, aus einem Blechstreifen gebildet ist, der eine hier rechteckförmig ausgebildete Ausnehmung 62 zur Aufnahme des hülsenförmigen Druckfederelements 46 aufweist. Zur kraftschlüssig positionierenden Aufnahme des Druckfederelements 46 in der Ausnehmung 62 des Zugelements 61 ist ein Stützanschlag 63 vorgesehen, der im vorliegenden Fall aus einem Blechstreifen besteht, der zur Durchführung des Zugelements 61 einen entsprechend ausgebildeten Durchsteckschlitz 64 aufweist.

Wie aus den **Fig. 10** und **11** hervorgeht, die die Relativpositionierung der Dichtleiste 43 der Spaltdichtung 60 zwischen den Stirnflächen 34 und 35 der benachbarten Filterelemente 31 während der Förderung entlang einer Längsförderstrecke 50 **(****Fig. 10****)** und vorgenannte Relativpositionierung während einer Förderung im Umlenkbereich 51 (**Fig. 11**) zeigen, stützt sich das Druckfederelement 46 bei einer Kompression zum einen an einem Stützrand 65 der im Zugelement 61 ausgebildeten Ausnehmung 62 und zum andern an dem Stützanschlag 63, der gegenüber dem Zugelement 61 längs verschiebbar ist, ab.

Wie aus der vorstehenden Erläuterung des Aufbaus der Spaltdichtung 60 deutlich wird, ist eine Installation der Spaltdichtung 60 in einem zwischen benachbarten Filterelementen 31 ausgebildeten Filterspalt 41 besonders leicht ausführbar, da hierzu kein Werkzeug benötigt wird und einfach durch eine unter Vorspannung vermittels des Druckfederelements 46 erfolgende Verriegelung des Stützanschlags 63 gegenüber dem Zugelement 61 eine sichere Positionierung der Spaltdichtung 60 im Filterspalt 41 erfolgen kann.

Abweichend von den dargestellten Ausführungsbeispielen ist es bei Bedarf natürlich auch möglich, den Dichtleisten der Spaltdichtungen nicht nur eine sondern mehrere Vorspanneinrichtungen zuzuordnen.

## Patentansprüche

1. Förderband-Filtereinrichtung zur mechanischen Reinigung einer in einem Kanal (14) oder dergleichen strömenden, mit Feststoffen verunreinigten (16) mit
einem endlosen Filterband (11) aus miteinander verbundenen, jeweils um eine waagerecht liegende Gelenkachse (52) gegeneinander verschwenkbaren, flächigen Filterelementen (31), und
je einem beiderseits des Filterbandes vorgesehenen flexiblen Antriebsmittel, zum Beispiel einem Kettentrieb (12) mit Umlenkelementen und zwei endlosen Antriebsketten (28), an denen seitlich die Filterelemente befestigt sind, sowie
einem Rahmengestell (10), das die Umlenkelemente und das Filterband trägt, wobei jedes Filterelement an einem Kettenglied (30) starr befestigt ist, und Stirnflächen (34, 35) des Filterelementes jeweils eine mit den Gelenkachsen der Kettenglieder parallele Stoßkante (36) aufweisen,
derart, dass die einander gegenüberliegenden Stoßkanten einen zwischen zwei Filterelementen ausgebildeten Spalt (41) definieren,
**dadurch gekennzeichnet,**
**dass** der Spalt eine Spaltdichtung (43, 60) aufweist, die auf der einen Seite des Filterbandes eine den Spalt überdeckende, sich an den Filterelementen mit der Dichtkraft abstützende und abdichtend anliegende Dichtleiste (43) und auf der anderen Seite des Filterbandes eine mit der Dichtleiste verbundene Vorspanneinrichtung (55, 65) zur Erzeugung der Dichtkraft aufweist.

2. Förderband-Filtereinrichtung nach Anspruch 1,
**dadurch gekennzeichnet,**
**dass** die Dichtleiste (43) auf der Anströmseite des Filterbandes (11) und die Vorspanneinrichtung (55, 65) auf der Abströmseite des Filterbandes angeordnet ist.

3. Förderband-Filtereinrichtung nach Anspruch 1 oder 2,
**dadurch gekennzeichnet,**
**dass** die Stirnflächen (34, 35) der Filterelemente (31) auf der Anströmseitc des Filterbandes (11) einen keilförmigen Spalt (41) mit im Wesentlichen V-förmig zueinander angestellten, durch die Stirnfläche gebildeten Spaltflanken ausbilden und die Dichtleiste mit ihren Längsrändern abdichtend gegen die Stirnflächen anliegt.

4. Förderband-Filtereinrichtung nach einem der vorangehenden Ansprüche,
**dadurch gekennzeichnet,**
**dass** die Längsränder der Dichtleiste (43) durch eine konvex ausgebildete Umfangskontur der Dichtleiste gebildet sind.

5. Förderband-Filtereinrichtung nach einem der vorangehenden Ansprüche,
**dadurch gekennzeichnet,**
**dass** die Dichtleiste (43) einen kreisförmigen Querschnitt aufweist.

6. Förderband-Filtereinrichtung nach einem der vorangehenden Ansprüche,
**dadurch gekennzeichnet,**
**dass** die Dichtleiste einen Hohlquerschnitt aufweist.

7. Förderband-Filtereinrichtung nach einem der vorangehenden Ansprüche,
**dadurch gekennzeichnet,**
**dass** die Dichtleiste mit Durchflussöffnungen zum Durchtritt der strömenden Flüssigkeit versehen ist.

8. Förderband-Filtereinrichtung nach Anspruch 7,
**dadurch gekennzeichnet,**
**dass** die Dichtleiste mit einem Lochraster versehen ist, derart, dass die Dichtleiste als Filterelement wirkt.

9. Förderband-Filtereinrichtung nach einem der vorangehenden Ansprüche,
**dadurch gekennzeichnet,**
**dass** die Dichtleiste aus einzelnen in einer Reihenanordnung angeordneten Dichtelementen gebildet ist.

10. Förderband-Filtereinrichtung nach einem der vorangehenden Ansprüche,
**dadurch gekennzeichnet,**
**dass** die Vorspanneinrichtung (55, 65) ein mit einem Ende mit der Dichtleiste (43) verbundenes, sich in Anströmrichtung durch den Spalt (41) erstreckendes Zugelement (45, 61) aufweist, das mit seinem anderen Ende mit einer Druckfedereinrichtung (46) verbunden ist, die sich an einer Stützbasis abstützt, die den Spalt auf der der Dichtleiste abgewandten Seite des Filterbandes überbrückt.

11. Förderband-Filtereinrichtung nach Anspruch 10,
**dadurch gekennzeichnet,**
**dass** die Druckfedereinrichtung aus einem formelastischen Kunststoffelement gebildet ist.

12. Förderband-Filtereinrichtung nach Anspruch 11,
**dadurch gekennzeichnet,**
**dass** das Kunststoffelement rohr- oder hülsenförmig ausgebildet ist.

13. Förderband-Filtereinrichtung nach einem der vorangehenden Ansprüche,
**dadurch gekennzeichnet,**
**dass** die Vorspanneinrichtung (55, 65) bezogen auf die Breite des Spaltes (41) mittig angeordnet ist.

## Claims

1. A conveyor belt filter device for mechanically cleaning a fluid (16) that is polluted with solids and flows in a channel (14) or the like comprising
an endless filter belt (11) of interconnected, planer filter elements (31), which can be respectively pivoted relative to one another about a horizontal link axis (52) and
flexible driving means provided on both sides of the filter belt, for example a chain drive (12) with deflection elements and two endless drive chains (28), on which the filter elements are laterally attached, as well as
a framework (10), which carries the deflection elements and the filter belt, wherein each filter element is rigidly attached to a chain link (30) and front surfaces (34, 35) of the filter element respectively have an abutment edge (36), which runs parallel to the link axes of the chain links,
such that the opposite abutment edges define a gap (41) formed between two filter elements,
**characterized in that**
the gap is provided with a gap seal (43, 60), which on one side of the filter belt comprises a sealing strip (43) which is supported on the filter elements with the sealing force and abuts in a sealing manner covering the gap, and on the other side of the filter belt comprises a pre-stressing device (55, 65), which is connected to the sealing strip and serves for generating the sealing force.

2. The conveyor belt filter device according to claim 1,
**characterized in that**
the sealing strip (43) is arranged on the inflow side of the filter belt (11) and the pre-stressing device (55, 65) is arranged on the outflow side of the filter belt.

3. The conveyor belt filter device according to claim 1 or 2,
**characterized in that**
the front surfaces (34, 35) of the filter elements (31) form on the inflow side of the filter belt (11) a wedge-shaped gap (41) with gap flanks that are arranged relative to one another in a substantially V-shaped manner and formed by the front surfaces, and **in that** the sealing strip abuts against the front surfaces in a sealing manner with its longitudinal edges.

4. The conveyor belt filter device according to any of the preceding claims,
**characterized in that**
the longitudinal edges of the sealing strip (43) are formed by a convexly designed peripheral contour of the sealing strip.

5. The conveyor belt filter device according to any of the preceding claims,
**characterized in that**
the sealing strip (43) has a circular cross-section.

6. The conveyor belt filter device according to any of the preceding claims,
**characterized in that**
the sealing strip has a hollow cross-section.

7. The conveyor belt filter device according to any of the preceding claims,
**characterized in that**
the sealing strip is provided with flow-through openings for the passage of the flowing fluid.

8. The conveyor belt filter device according to claim 7,
**characterized in that**
the sealing strip is provided with a hole pattern such that the sealing strip acts as a filter element.

9. The conveyor belt filter device according to any of the preceding claims,
**characterized in that**
the sealing strip is formed of individual sealing elements that are arranged in a row.

10. The conveyor belt filter device according to any of the preceding claims,
**characterized in that**
the pre-stressing device (55, 65) comprises a tension element (45, 61), which is connected to the sealing strip (43) with one end and extends through the gap (41) in the flow direction while its other end is connected to a pressure spring means (46) which is supported on a support base which bridges the gap on the side of the filter belt that faces away from the sealing strip.

11. The conveyor belt filter device according to claim 10,
**characterized in that**
the pressure spring means is formed of a dimensionally elastic plastic element.

12. The conveyor belt filter device according to claim 11,
**characterized in that**
the plastic element is realized in a tubular or sleeve-shaped manner.

13. The conveyor belt filter device according to any of the preceding claims,
**characterized in that**
the pre-stressing device (55, 65) is arranged centrally in relation to the width of the gap (41).

## Revendications

1. Dispositif filtrant de tapis roulant pour purifier mécaniquement un liquide (16) encrassé de matière solide et s'écoulant dans un canal (14) et d'autres choses semblables, avec
une bande de filtre sans fin (11) formée d'éléments de filtre (31) étendus connectés entre eux qui peuvent pivoter l'un par rapport à l'autre autour d'un axe articulaire (52) horizontal et
des moyen d'entraînement flexible pourvu de part et d'autre de la bande de filtre, pour exemple un entraînement par chaîne (12) avec des éléments de déviation et deux chaînes d'entraînement (28) sans fin auxquelles les éléments de filtre sont latéralement attachés, et un cadre (10) qui porte les éléments de déviation et la bande de filtre, dans lequel chaque élément de filtre est rigidement attaché à un maillon de chaîne (30), et des surfaces frontales (34, 35) de l'élément de filtre comportent respectivement un bord de butée (36) parallèle aux axes articulaires des maillons de chaîne,
de telle manière que les bords de butée opposés définissent une fissure (41) formée entre les deux éléments de filtre,
**caractérisé en ce que**
la fissure comporte un joint de fissure (43, 60) qui comporte à l'un côté de la bande de filtre une moulure de joint (43) couvrant la fissure, étant supportée et butant scellant aux éléments de filtre avec la force de scellage et à l'autre côté de la bande de filtre un dispositif de précontrainte (55, 65) connecté à la moulure de joint pour générer la force de scellage.

2. Dispositif filtrant de tapis roulant selon la revendication 1,
**caractérisé en ce que**
la moulure de joint (43) est disposée au côté d'afflux de la bande de filtre (11) et le dispositif de précontrainte (55, 65) est disposé au côté de sortie de la bande de filtre.

3. Dispositif filtrant de tapis roulant selon la revendication 1 ou 2,
**caractérisé en ce que**
les surfaces frontales (34, 35) des éléments de filtre (31) forment au côté d'afflux de la bande de filtre (11) une fissure (41) en forme d'une cale avec des flancs de fissure substantiellement inclinés l'un à l'autre en forme de V, formés par les surfaces frontales et la moulure bute en scellant avec ses bords longitudinales aux surfaces frontales.

4. Dispositif filtrant de tapis roulant selon l'une quelconque des revendications précédentes,
**caractérisé en ce que**
les bords longitudinales de la moulure de joint (43) sont formés par un contour périphérique en forme convexe de la moulure de joint.

5. Dispositif filtrant de tapis roulant selon l'une quelconque des revendications précédentes,
**caractérisé en ce que**
la moulure de joint (43) a une section transversale circulaire.

6. Dispositif filtrant de tapis roulant selon l'une quelconque des revendications précédentes,
**caractérisé en ce que**
la moulure de joint a une section transversale creuse.

7. Dispositif filtrant de tapis roulant selon l'une quelconque des revendications précédentes,
**caractérisé en ce que**
la moulure de joint est pourvue d'apertures d'écoulement pour le passage du liquide s'écoulant.

8. Dispositif filtrant de tapis roulant selon la revendication 7,
**caractérisé en ce que**
la moulure de joint est pourvue d'un motif de perforations de telle manière que la moulure de joint agisse comme élément de filtre.

9. Dispositif filtrant de tapis roulant selon l'une quelconque des revendications précédentes,
**caractérisé en ce que**
la moulure de joint est formée d'éléments de joint arrangés en ligne.

10. Dispositif filtrant de tapis roulant selon l'une quelconque des revendications précédentes,
**caractérisé en ce que**
le dispositif de précontrainte (55, 65) comporte un élément de traction (45, 61) connecté avec une extrémité à la moulure de joint (43), s'étendant en direction d'afflux par la fissure (41), l'élément de traction étant connecté avec son autre extrémité à un dispositif de ressort de pression (46) qui est supporté sur une base d'appui qui comble la fissure sur le côté de la bande de filtre détourné de la moulure de joint.

11. Dispositif filtrant de tapis roulant selon la revendication 10,
**caractérisé en ce que**
le dispositif de ressort de pression est formé d'un element d'une matière plastique dimensionnellement élastique.

12. Dispositif filtrant de tapis roulant selon la revendication 11,
**caractérisé en ce que**
l'élément plastifié est réalisé en forme d'un tube ou d'une cosse.

13. Dispositif filtrant de tapis roulant selon l'une quelconque des revendications précédentes,
**caractérisé en ce que**
le dispositif de précontrainte (55, 65) est disposé centralement par rapport à la largeur de la fissure (41).
